(19) Europäisches Patentamt

European Patent Office

Office européen des brevets

(11) **EP 1 403 688 A2**

## (12) EUROPEAN PATENT APPLICATION

(43) Date of publication:
**31.03.2004 Bulletin 2004/14**

(51) Int Cl.$^7$: **G02F 1/13357**

(21) Application number: **03078015.9**

(22) Date of filing: **23.09.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **24.09.2002 US 253805**

(71) Applicant: **Delphi Technologies, Inc.**
**Troy, MI 48007 (US)**

(72) Inventors:
• **Betz, Alexander C.**
**Kokomo, IN 46902 (US)**

• **Clute, David J.**
**Cincero, IN 46034 (US)**

(74) Representative: **Denton, Michael John**
**Delphi European Headquarters,**
**64 avenue de la Plaine de France,**
**Paris Nord II,**
**BP 60059,**
**Tremblay-en-France**
**95972 Roissy Charles de Gaulle Cédex (FR)**

### (54) Illumination of a liquid crystal display

(57) A liquid crystal display (LCD) arrangement (10) having improved optical properties is disclosed. The LCD arrangement (10) comprises a chip-on-glass display (14) including a graphics area (16), a lightpipe (18), and a plurality of light emitting diodes (LEDs) (24). The lightpipe (18) is placed adjacent to the graphics area (16). The plurality of LEDs (24) are located at or beyond the outer perimeter of the graphics area (16) and are adjacent to the lightpipe (18).

**EP 1 403 688 A2**

**Description**

Technical Field

The present invention relates to liquid crystal displays. More specifically, the present invention relates to liquid crystal display arrangements having improved optical properties.

Background of the Invention

Liquid crystal displays (LCDs) have a plurality of pixels or segments that may be excited by an electric field so that information, such as light from a light source, may be optically communicated to a receiver, such as a viewer. It is known in the art that typically, there is an asymmetry to the optical properties of LCD displays. It is also known that LCD displays comprise, among other elements, a thin-film diffuser, a rear polarizer, a front polarizer, and a layer of LC fluid. Typically, the brightness of an LCD or a light emitting diode (LED) is rated by "nits" or candelas (cd). When rating luminance or transmittance of an LCD, the commonly accepted rating value is generally given in units of $cd/m^2$.

In operation, when a pixel is excited to an "on" state, light passes through the rear polarizer and is minimally rotated by the LC fluid prior to encountering the front polarizer. The front polarizer may be in one of two orientations depending on whether it is desired that the LCD be transmissive when the power is on or untransmissive (dark) when the power is off. In the first orientation of the front polarizer, light that passes through a maximally excited pixel will be blocked by the front polarizer, and the pixel will appear dark (i.e. the display is transmissive when the power is off). In the second orientation of the front polarizer, light that passes through a maximally excited pixel will appear to be active because it is allowed to pass through the front polarizer (i.e. the display is dark when the power is off). In the first case where the "on" pixels are dark, the display is said to operate in the "positive mode." In the second case where the "on" pixels appear to be active, the display is said to be operating in the "negative mode." In the following discussion, the LCD display is assumed to operate in the "negative mode." However, the following description may apply equally to the "positive mode."

When the electric field sufficiently excites a pixel or segment, the pixel has a higher or lower amount of luminance compared with pixels or segments that are excited to a lesser degree. Thus, pixels that are sufficiently excited to a higher degree are considered to be in an "on-state" (i.e. more or less light per area of the pixel is transmitted in the direction of the viewer's eye). Likewise, when a pixel is not sufficiently excited by an electric field, it has a lesser amount of luminance and is considered to be in an "off-state" (i.e. less light per area of the pixel is transmitted in the direction of the viewer's eye). For purposes of discussion, "on" pixels will be considered to transmit more light than "off" pixels.

One example of an asymmetry to LCD optical properties is the contrast ratio (CR). The contrast ratio of a pixel is the ratio of a maximum transmitted light, $T_{max}$, in the "on" state over a minimum transmitted light, $T_{min}$, in the "off" state.

$$CR = \frac{T_{max}}{T_{min}}$$

For the contrast ratio shown above, the minimum transmitted light value, $T_{min}$, dominates the ratio because $T_{min}$ is generally a small number that is in the denominator. The contrast ratio of an LCD also depends on the viewing angle of the viewer. A "prime viewing angle" is the angle at which the contrast ratio is at its maximum compared with other angles. When the LCD is observed at an angle that is normal to the viewing area, the contrast ratio is maximized. This is considered to be "the prime viewing angle." Generally, the prime viewing angle is close to the normal viewing angle of the display. However, when an LCD is viewed at an angle which is substantially different from the prime viewing angle, the contrast ratio, in general, will be diminished in some circumstances to a considerable degree.

In other situations, when the viewer deviates from the prime viewing angle of the LCD, the on-state pixels may retain their optimal luminance and the off-state pixels may have a higher luminance, or vice versa. At some viewing angles, the "on" and "off" pixels may look the same; this would mean that the minimum contrast ratio is equal to 1. Contrast ratios approaching values of 1 imply that pixels appear about the same whether pixels are in the on-state or the off-state. In such situations, it is desirable to design an LCD with higher contrast ratios, which are usually needed to produce discemable displays in conditions of high ambient light. Typically, the ambient light is reflected off of both on-state and off-state pixels, thereby reducing the contrast ratio perceived by the viewer.

Light leakage of the LCD also tends to give the appearance that pixels are in an on-state when they are actually in an off-state. Ideally, the off-state of the LCD should have light transmission for many viewing angles that allows for maximal contrast ratios. Thus, when an LCD is viewed from an angle that deviates from the prime viewing angle, the contrast ratio may decrease, and at some angles, the viewer may not be able to differentiate an off- or on-state of a specific pixel. Even further, reduced contrast at certain viewing angles degrades the appearance of the graphics area of the display to the point when the LCD is deemed not suitable for a given application.

Another example of an asymmetry to LCD optical properties is the appearance of "hot spots." Hot spots typically arise from LEDs that are located directly behind the graphics area of the LCD, which tend to create a very bright direct light in the graphics area near the tip of individual LEDs. Hot spots also typically arise when the LEDs behind the graphics area have an uneven spacing such that light from each individual LED is isolated to a region of the graphics area. In some situations, the hot spot tends to wash out discernable information in the graphics area, which undesirably results in the visibility of the LED itself rather than information that is to be communicated in the graphics area.

The acceptable image of the LCD generally has two criteria: the contrast ratio must be within an acceptable range for a given application, and the off-state transmission must be below an acceptable value for that application. For example, with regard to the second criteria, most negative mode automotive LCD displays must appear dark so that the displays do not appear to have hot spots that are visible as "bright patches of light" at night to people in the vehicle that are outside of the prime viewing area.

In operation, the thin-film diffuser of the LCD is supposed to disperse hot spots, which are a direct result from locating the LEDs directly behind the graphics area. When the hot spots are dispersed, the LCD may have a rating of about 35cd. However, in certain lighting situations, the thin-film diffuser may have little, if no effect on hot spots. The hot spots may still be visible and create a non-uniform lighting situation from the top to bottom or left to right of the LCD's graphic area.

Essentially, the hot spots interfere with the graphic area's luminance, intensity, and overall visibility. Even further, because hot spots are a direct result from the brightness of LEDs, LCD displays are typically restricted to using regular, lower-powered LEDs. As an alternative to LEDs, incandescent lamps may be used, which are typically rated at about 50-60cd. Although some incandescent lamps may have a higher rating in candela as compared to regular, low-powered LEDs, incandescent lamps tend to cause a high operating temperature of the LCD.

Although adequate for most applications, typical LCD arrangements comprise a host of situations relating to the asymmetry of LCD optical properties. Thus, there is a need for an LCD arrangement that maintains an acceptable image and reduces the asymmetry of LCD optical properties over a wide range of viewing angles.

Summary of the Invention

In a first embodiment of the invention, a liquid crystal display (LCD) arrangement having improved optical properties is described. The LCD arrangement comprises a chip-on-glass display which includes a graphics area. The LCD arrangements also comprises a lightpipe, and a plurality of LEDs. The lightpipe is placed adjacent the graphics area. The plurality of LEDs are located at or beyond an outer perimeter of the graphics area and are adjacent to the lightpipe.

A second embodiment of the invention is an LCD arrangement having improved optical properties. In this embodiment, the LCD arrangement includes chip-on-glass display including a graphics area. The LCD arrangement also comprises a lightpipe, and a plurality of LEDs. The lightpipe includes a light-diffusing polycarbonate material and is placed adjacent the graphics area. The plurality of LEDs are located at or beyond an outer perimeter of the graphics area and are adjacent to the lightpipe. A variable depth permits greater design flexibility. The depth may vary according to a rating of the LEDs, a thickness of the lightpipe, and a distance between a central axis of each row of LEDs. The distance between the central axis of each row of LEDs is a function of the light-diffusing capabilities of the polycarbonate material of the lightpipe.

Another embodiment of the invention is an LCD arrangement having improved optical properties. In this embodiment, the LCD arrangement includes a chip-on-glass display including a graphics area. The LCD arrangement also comprises a shield, a lightpipe, a housing, and a plurality of LEDs. The shield is disposed over the chip-on-glass display. The lightpipe is placed adjacent the graphics area and includes light-diffusing polycarbonate material. The housing secures the lightpipe and chip-on-glass display. The plurality of LEDs are defined to include a total of twelve LEDs arranged in two opposing rows of six LEDs that are located at or beyond an outer perimeter of the graphics area that are adjacent to the lightpipe. Each LED is spaced apart at a first distance. A variable depth permits greater design flexibility. The depth may vary according to a rating of the LEDs, a thickness of the lightpipe, and a distance between a central axis of each row of LEDs. The distance between the central axis of each row of LEDs is a function of the light-diffusing capabilities of the polycarbonate material of the lightpipe.

Various additional aspects and advantages of this invention will become apparent to those skilled in the art from the following detailed description of the preferred embodiment, when read in light of the accompanying drawings.

Brief Description of the Drawings

Figure 1 is an exploded perspective view of a liquid crystal display according to the present invention;

Figure 2 is a top view of the liquid crystal display according to Figure 1; and

Figure 3 is a cross-sectional view of the liquid crystal display according to Figure 1.

Detailed Description of the Preferred Embodiments

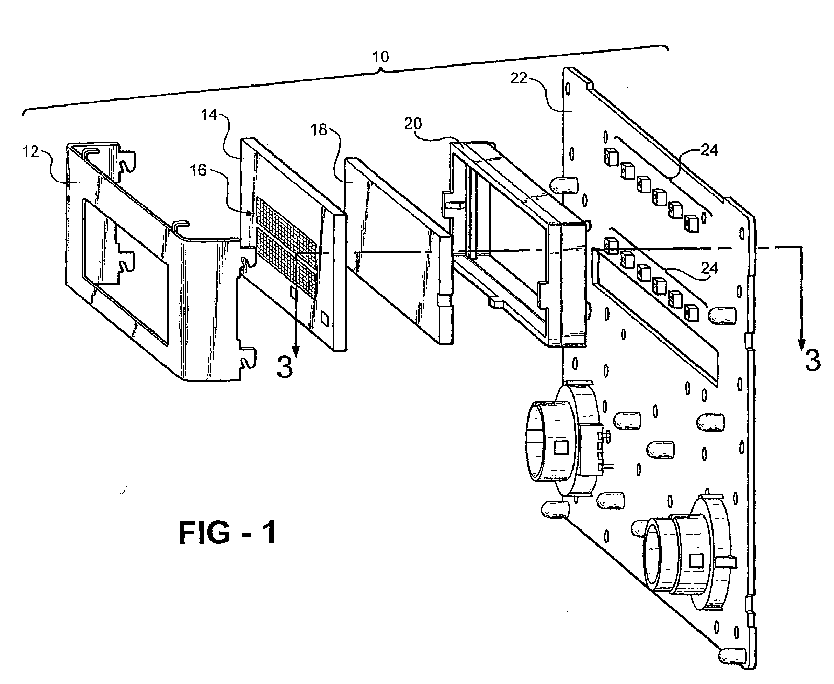

As seen in Figure 1, the present invention is directed to a liquid crystal display (LCD) arrangement, which is shown generally at 10. The LCD arrangement 10 may be applied to any device that calls for the implementation of an LCD, such as an interchangeable compact disc player (ICDX), a radio, a dashboard display, or the like. The LCD arrangement 10 may be used in conditions where the viewer may have to contend with a high amount of ambient lighting or other elements that causes asymmetry to the optical properties of the LCD. The LCD arrangement 10 includes a shield 12, a chip-on-glass display (COG display 14) comprising a graphics area 16, a lightpipe 18, a housing 20, and a circuit board 22 comprising a plurality of light emitting diodes (LEDs 24).

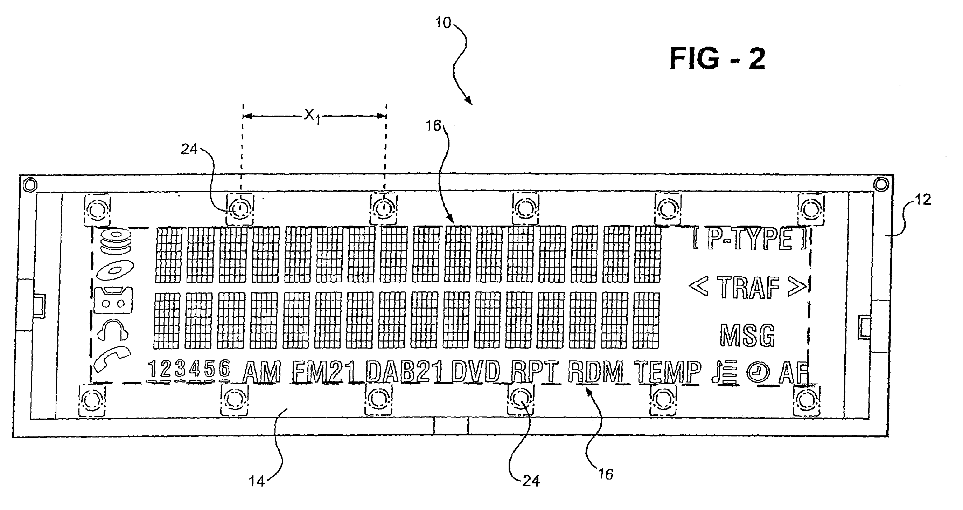

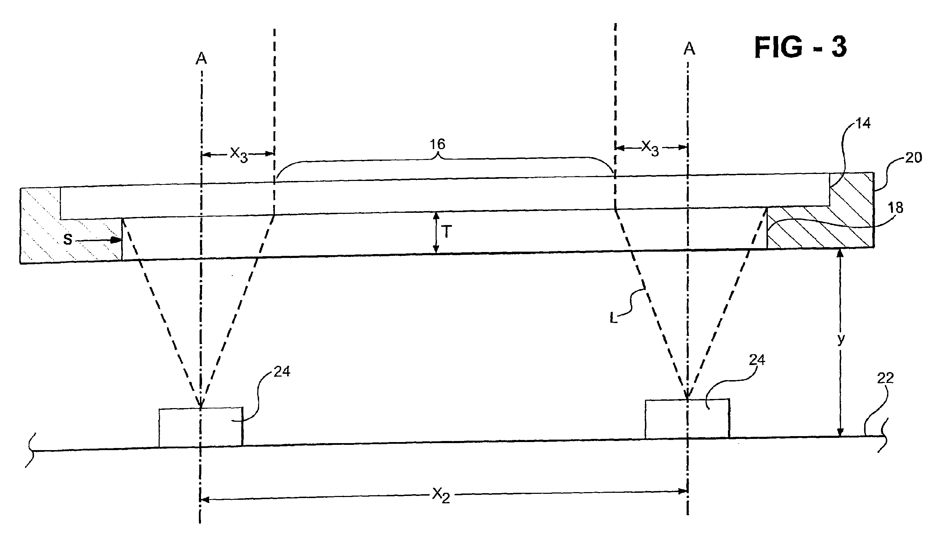

As seen more clearly in Figure 2, the LEDs 24 are shown in an inventive arrangement of locating the LEDs 24 on the outer perimeter of the graphics area 16 (i.e. the LEDs 24 are disposed 'outside' of the graphics area 16) and adjacent to the lightpipe 18 (Figure 1). Outside of the graphics area 16 is defined to be at or beyond an outer perimeter of the graphics area 16. Adjacent to the lightpipe 18 may be defined as placing the LEDs 24 directly behind the lightpipe 18 or in a side-emitting arrangement, which is shown generally at S (Figure 3). Each LED 24 may be defined as a low-powered, regular LED (i.e. having a rating of 150cd or less). Alternatively, each LED 24 may be a high-powered LED, such as a "super-bright" LED (i.e. having a rating of 150cd or greater, such as for example, 2000cd). Each LED 24 may also comprise a color that is capable of producing colored light, such as, for example, red light, green light, blue light, orange light, white light, etc.

In the illustrated embodiment according to Figures 1 and 2, the LCD arrangement 10 includes a total of twelve LEDs 24 arranged in two opposing rows of six LEDs 24 that are disposed on the outer perimeter of the graphics area 16. As illustrated, each LED 24 is spaced apart at a distance, $X_1$ (Figure 2). Although only twelve LEDs 24 arranged in two rows of six LEDs 24 are shown, the invention is not meant to be limited to twelve LEDs 24 in an arrangement of two rows of six LEDs 24. The LCD arrangement 10 may comprise any number of LEDs 24 arranged in any desirable configuration such as in a single row, or in a row and column (i.e. boxed) pattern such that the LEDs 24 are located on the outside of the graphics area 16. For purposes of reducing cost of the LCD arrangement 10, it is desirable to reduce the number of LEDs 24 in the design of the LCD arrangement 10; however, it should be considered that by reducing the number of LEDs 24, the visibility of the graphics area 16 may be degraded to a certain degree.

Preferably, the lightpipe 18 comprises light-diffusing polycarbonate material, or a similar, suitable material. Essentially, by moving the LEDs 24 outside of the graphics area 16 and by employing the lightpipe 18 under the COG display 14, the inventive LCD arrangement 10 creates uniform lighting of the graphics area 16 and eliminates undesirable hot spots. Even further, the properties of the lightpipe 18 enables the provisional of designing the LCD arrangement 10 with super-bright LEDs 24 because the light is piped into the graphics area 16, rather than emitting light directly into the graphics area 16 with 'brute force,' which may cause the undesirable hot spots. Yet even further, because the light may be piped from outside of the graphics area 16, fewer LEDs 24 may be implemented in the design of the LCD arrangement 10.

The inventive LCD arrangement 10 also permits greater design flexibility. More specifically, the LCD arrangement 10 permits various display depths, which is shown general at y in Figure 3. As seen in Figure 3, the LCD arrangement 10 depth, y, may vary according to the power of the LEDs 24, the thickness, T, of the lightpipe 18, and the distance, $X_2$, between the central axis, A, for each row of LEDs 24. The distance, $X_2$, between the central axis, A, for each row of LEDs 24, is a function of the light-diffusing capabilities of the polycarbonate material of the lightpipe 18. The inventive LCD arrangement 10 permits the LEDs 24 to propagate light, L, through the lightpipe 18 from at least a distance, $X_3$, of the central axis, A, LEDs 24 to the edge of the graphics area 16.

Accordingly, if regular low-powered LEDs 24 are implemented, the thickness, T, of the lightpipe 18 may have to be greater to a certain degree, which would result in the decrease of the depth, y. Although the thickness, T, of the lightpipe 18 may increase, it does not increase substantially to the point where it is greater than the depth, y. Conversely, if super-bright LEDs 24 are implemented, the thickness, T, of the lightpipe 18 may be decreased and the depth, y, may also be decreased; however, if desired, the depth, y, may be increased because super-bright LEDs may propagate light at greater distances than regular, low-power LEDs.

According to one possible LCD arrangement 10 for the present invention, regular, low-powered LEDs 24 are implemented in the design of the LCD arrangement 10. The distance, $X_2$, between each row of LEDs 24 may be approximately 21.67mm, and the distance, $X_3$, from the central axis of the row of LEDs 24 to the edge of the graphics area 16 is approximately 2mm. According to the values of $X_2$ and $X_3$, the graphics area 16 is approximately 17.67mm in width. The thickness, T, of the lightpipe 18 is approximately 3.6mm, and therefore, because low powered LEDs 24 are implemented, the depth, y, is approximately 8.4mm.

In operation, the LCD arrangement 10 increases the overall intensity (i.e. luminance and transmittance) of the LCD. The LCD arrangement 10 is capable of producing at least 120cd/m$^2$ and may have a contrast ratio of 60 with extremely uniform backlighting that is within 10% of each measured region anywhere in the graphics area 16. Table 1, which is shown below, depicts values for the luminance of a bare lightpipe 18 without the graphics area 16, and Table 2 depicts values for a 15% transmittance of the LCD arrangement 10 when the COG display 14 with the graphics area 16 is disposed over the lightpipe 18. Both Tables 1 and 2 are directed to an application when regular, low-powered LEDs 24 are implemented in the design of the LCD arrangement 10. The luminance values in Table 1 illustrates what the LCD arrangement 10 is capable of producing, and the 15% transmittance values in Table 2 illustrates the worse-case transmittance of luminance from Table 1 that is allowed through the graphics area 16.

Table 1

| Values in luminance for a bare lightpipe using super-bright LEDs | | | |
|---|---|---|---|
| Top Left | Middle Left | Bottom Left | Bottom Middle |
| 878 cd/m$^2$ | 891 cd/m$^2$ | 981 cd/m$^2$ | 1037 cd/m$^2$ |

Table 2

| Values in transmittance when the graphics area is applied to the bare lightpipe using super-bright LEDs | | | |
|---|---|---|---|
| Top Left | Middle Left | Bottom Left | Bottom Middle |
| 132 cd/m$^2$ | 134 cd/m$^2$ | 147 cd/m$^2$ | 156 cd/m$^2$ |

These results for Tables 1 and 2 are dedicated to measurements at random locations of the graphics area 16 such as the top left, middle left, bottom left, and bottom middle when the LCD arrangement 10 includes a super-bright LED implementation. It will of course be understood that that the Tables above are intended to show the results of super-bright LEDs and that the performance of the LCD arrangement 10 will vary proportionally when regular, low-powered LEDs are implemented in the design of the LCD arrangement 10.

The LCD arrangement 10 described above is best suited for smaller- or medium-sized LCD displays. Accordingly, the distance, $X_2$, between each row of LEDs 24 is approximately 40mm or less. Even further, the two rows of LEDs 24 may be spaced to any minimal distance, $X_2$, such as 21.67mm described above; however, if the two rows of LEDs 24 are spaced such that they are substantially next to each other (i.e. $X_2$ is 0mm), the LEDs 24 would undesirably be located inside the graphics area 16 (i.e. directly behind the graphics area 16). It may be possible to space the rows of LEDs 24 at a distance greater than 40mm; however, the lighting of the graphics area 16 may be degraded to a certain degree. In an alternative embodiment, it may be possible to implement a single row of LEDs 24 in the LCD arrangement 10. In such an implementation, it may be desirable to implement super-bright LEDs 24 in a single row implementation to account for the light from the other row of LEDs 24 that would ordinarily be included in the design of the LCD arrangement 10.

The LCD arrangement 10 described above overcomes the fallbacks of conventional LCD arrangements that includes LEDs 24 located directly behind the graphics area 16. As illustrated above, by moving the LEDs 24 outside of the graphics area 16 and by employing the lightpipe 18 under the COG display 14, the inventive LCD arrangement 10 creates uniform lighting of the graphics area 16 and essentially eliminates undesirable hot spots. Even further, the properties of the lightpipe 18 enables the potential for designing the LCD arrangement 10 with super-bright LEDs 24 because the light is piped into the graphics area 16, rather than emitting light directly behind the graphics area 16 with brute force. Yet even further, because the light may be piped from outside of the graphics area 16, fewer LEDs 24 may be implemented in the design of the LCD arrangement 10. Because fewer LEDs 24 may be called for in the design of the LCD arrangement 10, the LCD arrangement 10 may have a lower operating temperature. Additionally, because a lightpipe 18 is implemented in the LCD arrangement 10, the traditional need for a thin-film diffuser is obviated.

It should be understood that various alternatives to the embodiments of the invention described herein may be employed in practicing the invention. It is intended that the following claims define the scope of the invention and that the method and apparatus within the scope of these claims and their equivalents be covered thereby.

**Claims**

1. A liquid crystal display (LCD) arrangement (10) having improved optical properties, comprising:

   a chip-on-glass display (14) including a graphics area (16);

   a lightpipe (18) placed directly under the graphics area (16); and

   a plurality of light emitting diodes (LEDs) (24) that are located at or beyond an outer perimeter of the graphics area (16) adjacent to the lightpipe (18)..

2. The liquid crystal display arrangement (10) of claim 1, wherein adjacent to the lightpipe (18) is defined as placing the LEDs (24) directly behind the lightpipe (18).

3. The liquid crystal display arrangement (10) of claim 1, wherein adjacent to the lightpipe (18) is defined as placing the LEDs (24) in a side-emitting arrangement (S).

4. The liquid crystal display arrangement (10) of claim 1, wherein the LEDs (24) are low-powered LEDs.

5. The liquid crystal display arrangement (10) of claim 4, wherein the low-powered LEDs (24) have a rating of 150cd or less.

6. The liquid crystal display arrangement (10) of claim 1, wherein the LEDs (24) are high-powered LEDs.

7. The liquid crystal display arrangement (10) of claim 6, wherein the low-powered LEDs (24) have a rating of 150cd or more.

8. The liquid crystal display arrangement (10) of claim 1, wherein the LEDs (24) are arranged in two opposing rows that are disposed on the outer perimeter of the graphics area (16), wherein each LED (24) is spaced apart at a first distance ($X_1$).

9. The liquid crystal display arrangement (10) of claim 1, wherein the LCD arrangement (10) includes a single row of LEDs (24) that are disposed on the outer perimeter of the graphics area (16), wherein each LED (24) is spaced apart at a first distance ($X_1$).

10. The liquid crystal display arrangement (10) of claim 1, wherein the LCD arrangement (10) includes a boxed pattern of LEDs (24) that are disposed on the outer perimeter of the graphics area (16), wherein each LED (24) is spaced apart at a first distance ($X_1$).

11. The liquid crystal display arrangement (10) of claim 1, wherein the lightpipe (18) comprises light-diffusing polycarbonate material.

12. The liquid crystal display arrangement (10) of claim 11, wherein a variable depth (y) permits greater design flexibility, wherein the depth (y) may vary according to:

   a rating of the LEDs (24),

   a thickness (T) of the lightpipe (18), and

   a distance ($X_2$) between a central axis (A) of each row of LEDs (24), wherein the distance ($X_2$) between the central axis (A) of each row of LEDs (24) is a function of the light-diffusing capabilities of the polycarbonate material of the lightpipe (18).

13. A liquid crystal display (LCD) arrangement (10) having improved optical properties, comprising:

   a chip-on-glass display (14) including a graphics area (16);

   a lightpipe (18) placed directly under the graphics area (16) including light-diffusing polycarbonate material; and

a plurality of light emitting diodes (LEDs) (24) that are located at or beyond an outer perimeter of the graphics area (16) adjacent to the lightpipe (18), wherein a variable depth (y) permits greater design flexibility, wherein the depth (y) may vary according to

a rating of the LEDs (24),

a thickness (T) of the lightpipe (18), and

a distance ($X_2$) between a central axis (A) of each row of LEDs (24), wherein the distance ($X_2$) between the central axis (A) of each row of LEDs (24) is a function of the light-diffusing capabilities of the polycarbonate material of the lightpipe (18).

14. The liquid crystal display arrangement (10) of claim 13, wherein adjacent to the lightpipe (18) is defined as placing the LEDs (24) directly behind the lightpipe (18).

15. The liquid crystal display arrangement (10) of claim 13, wherein adjacent to the lightpipe (18) is defined as placing the LEDs (24) in a side-emitting arrangement (S).

16. The liquid crystal display arrangement (10) of claim 13, wherein the LEDs (24) are low-powered LEDs, wherein the rating of the LEDs (24) are 150cd or less.

17. The liquid crystal display arrangement of (10) claim 13, wherein the LEDs (24) are high-powered LEDs, wherein the rating of the LEDs (24) are 150cd or more.

18. The liquid crystal display arrangement (10) of claim 13, wherein the LCD arrangement (10) includes LEDs (24) arranged in two opposing rows that are disposed on the outer perimeter of the graphics area (16), wherein each LED (24) is spaced apart at a first distance ($X_1$).

19. The liquid crystal display arrangement (10) of claim 13, wherein the LCD arrangement (10) includes a single row of LEDs (24) that are disposed on the outer perimeter of the graphics area (16), wherein each LED (24) is spaced apart at a first distance ($X_1$).

20. The liquid crystal display arrangement (10) of claim 13, wherein the LCD arrangement (10) includes a boxed pattern of LEDs (24) that are disposed on the outer perimeter of the graphics area (16), wherein each LED (24) is spaced apart at a first distance ($X_1$).

21. A liquid crystal display (LCD) arrangement (10) having improved optical properties, comprising:

a chip-on-glass display (14) including a graphics area (16);

a shield (12) disposed over the chip-on-glass display (14);

a lightpipe (18) placed directly under the graphics area (16) including light-diffusing polycarbonate material;

a housing (20) that secures the lightpipe (18) and chip-on-glass display (14); and

a plurality of light emitting diodes (LEDs) (24), wherein the plurality of LEDs (24) are defined to include a total of twelve LEDs (24) arranged in two opposing rows of six LEDs (24) that are located at or beyond an outer perimeter of the graphics area (16) adjacent to the lightpipe (18), wherein each LED (24) is spaced apart at a first distance ($X_1$), wherein a variable depth (y) permits greater design flexibility, wherein the depth (y) may vary according to:

a rating of the LEDs (24),

a thickness (T) of the lightpipe (18), and

a distance ($X_2$) between a central axis (A) of each row of LEDs (24), wherein the distance ($X_2$) between the central axis (A) of each row of LEDs (24) is a function of the light-diffusing capabilities of the polycarbonate material of the lightpipe (18).

22. The liquid crystal display arrangement (10) of claim 21, wherein adjacent to the lightpipe (18) is defined as placing the LEDs (24) directly behind the lightpipe (18).

23. The liquid crystal display arrangement (10) of claim 21, wherein adjacent to the lightpipe (18) is defined as placing the LEDs (24) in a side-emitting arrangement (S).

24. The liquid crystal display arrangement (10) of claim 21, wherein the LEDs (24) are low-powered LEDs, wherein the rating of the LEDs (24) are 150cd or less.

25. The liquid crystal display arrangement (10) of claim 21, wherein the LEDs (24) are high-powered LEDs, wherein the rating of the LEDs (24) are 150cd or more.

FIG - 1

FIG - 2

FIG - 3